# EUROPÄISCHE PATENTSCHRIFT

(11) **EP 1 542 800 B1**
(45) Veröffentlichungstag und Bekanntmachung des Hinweises auf die Patenterteilung: **18.07.2012**
(21) Anmeldenummer: 03794941.9
(22) Anmeldetag: 26.08.2003
(51) Int. Cl.: C01B 3/38, C01B 3/40, H01M 8/06, B01J 37/025, B01J 23/40, B01J 23/46

(54) **VERFAHREN ZUR AUTOTHERMEN DAMPFREFORMIERUNG VON KOHLENWASSERSTOFFEN MIT EINEM MEHRSCHICHTIGEN KATALYSATOR**
PROCESS FOR THE AUTOTHERMAL STEAM REFORMING OF HYDROCARBONS WITH A MULTI-LAYER CATALYST
PROCÉDÉ DE VAPOREFORMAGE AUTOTHERME D'HYDROCARBURES AVEC UN CATALYSEUR MULTICOUCHE

(30) Priorität: 26.08.2002 EP 02019014
(43) Veröffentlichungstag der Anmeldung: 22.06.2005
(73) Patentinhaber: Umicore AG & Co. KG, 63457 Hanau-Wolfgang (DE)
(72) Erfinder: WIELAND, Stefan, 63069 Offenbach (DE); BAUMANN, Frank, 74395 Mendelsheim (DE); DUISBERG, Matthias, 60599 Frankfurt (DE)
(86) Internationale Anmeldenummer: PCT/EP2003/009449
(87) Internationale Veröffentlichungsnummer: WO 2004/024324

(56) Entgegenhaltungen:
- EP-A- 0 462 593
- WO-A-02/18269
- US-A- 5 459 119

## Beschreibung

Die Erfindung betrifft ein Verfahren zur autothermen Dampfreformierung von Kohlenwasserstoffen unter Verwendung eines mehrschichtigen Katalysators. Dabei wird ein auf eine Vorwärmtemperatur erwärmtes Eduktgemisch aus Kohlenwasserstoffen, Sauerstoff und Wasser oder Wasserdampf über einen mehrschichtig aufgebauten Katalysator geleitet, der in der Lage ist, sowohl die partielle Oxidation als auch die Dampfreformierung von Kohlenwasserstoffen zu katalysieren. Das Verfahren findet Verwendung zur Erzeugung von Wasserstoff bzw. wasserstoffhaltigen Brenngasen in Reformersystemen, vorzugsweise für Brennstoffzellen.

Für die Produktion von Wasserstoff können bekanntermaßen Kohlenwasserstoffe bei hohen Temperaturen in der Gegenwart von Wasserdampf an einem geeigneten Katalysator zu Wasserstoff, Kohlenmonoxid und Kohlendioxid umgesetzt werden. Diese Reaktion (auch als "Dampfreformierung" bezeichnet) ist stark endotherm und läuft zum Beispiel nach folgender Reaktionsgleichung ab:

C₈H₁₈ + 8 H₂O ⇄ 8 CO + 17 H₂ ΔH = + 1250 kJ/mol (1)

Charakteristisch für die Dampfreformierungsreaktion (1) ist das sogenannte Dampf/Kohlenstoff-Verhältnis S/C (Steam to Carbon ratio). In der Reaktionsgleichung (1) ist S/C gleich 1.

Eine weitere, bekannte Möglichkeit zur Erzeugung von Wasserstoff ist die katalytische partielle Oxidation (engl. "Catalytic Partial Oxidation", abgekürzt "CPO"). Hierbei werden die Kohlenwasserstoffe in Gegenwart von Sauerstoff an einem Katalysator gemäß der Reaktionsgleichung für die partielle Oxidation (2) zu Kohlenmonoxid und Wasserstoff umgesetzt:

C₈H₁₈ + 4 O₂ ⇄ 8 CO(g) + 9 H₂ ΔH = -685 kJ/mol (2)

Eine wichtige Kenngröße für die partielle Oxidation ist die Luftzahl λ, die als Verhältnis aus eingesetzter Molanzahl Sauerstoff zu der für eine vollständige Oxidation benötigten Molanzahl Sauerstoff definiert ist (siehe Reaktionsgleichung (3)):

C₈H₁₈ + 12.5 O₂ ⇄ 8 CO₂ + 9 H₂O λ = 1 ΔH = -5102 kJ/mol (3)

Für einen vollständigen Umsatz des Kohlenwasserstoffs zu Kohlenmonoxid und Wasserstoff gemäß Gleichung (3) wird eine Luftzahl λ < 1, idealerweise λ = 4/12,5 = 0,32 benötigt.

Die vorliegende Erfindung befasst sich mit einer weiteren Möglichkeit der Wasserstoffgewinnung, der sogenannten autothermen Dampfreformierung. Dieses Verfahren kombiniert die Dampfreformierung (Gleichung (1)) mit der katalytischen, partiellen Oxidation (Gleichung (2)), wobei die exotherme, partielle Oxidation die notwendige Reaktionswärme für die endotherme Dampfreformierung liefert. Das Eduktgemisch kann hierbei auf eine Vorwärmtemperatur vorgewärmt werden. Das Produktgemisch befindet sich bei der am Reaktorausgang herrschenden Temperatur im thermodynamischen Gleichgewicht. Die autotherme Dampfreformierung verbindet die Vorteile der katalytischen, partiellen Oxidation (gutes Startverhalten) mit denen der Dampfreformierung (hohe Wasserstoffausbeuten). Das Verfahren ist damit gut geeignet für die onboard-Erzeugung von Wasserstoff für mobile Brennstoffzellensysteme aber auch für den Einsatz in kompakten Reformern für stationäre Brennstoffzellenanlagen.

Katalysatorsysteme für die autotherme Reformierung von Kohlenwasserstoffen sind bekannt. Der Stand der Technik wird nachfolgend dargestellt:
US-A-4,415,484 offenbart einen Katalysator für die Verwendung in einem autothermen Reformierungsreaktor. Der Katalysator enthält 0,01 bis 6% Rhodium, sowie 10 bis 35 % Calciumoxid auf einem Träger aus Aluminiumoxid, welches darüber hinaus etwa 3 bis 15 % Magnesiumoxid enthält. Der Katalysator wird in Form von Pellets eingesetzt und zeichnet sich besonders durch eine geringe Neigung zur Verkokung bei niedrigen Sauerstoff/Kohlenstoff-Verhältnissen aus. Ein typisches Katalysatorsystem zur Durchführung der autothermen Reformierung enthält gemäß diesem Dokument auf etwa einem Drittel seiner Länge einen Eisenoxid-Katalysator für die partielle Oxidation und auf zwei Drittel seiner Länge den beschriebenen Rhodium-Katalysator. Ein mehrschichtiger Katalysatoraufbau wird nicht beschrieben.

WO 98/55227 beschreibt einen bifunktionellen Katalysator für die partielle Oxidation von Kohlenwasserstoffen, der sowohl eine Aktivität für die Dehydrierung der Kohlenwasserstoffe besitzt, als auch die Fähigkeit hat, die Kohlenwasserstoffkette selektiv zu oxidieren. Die Dehydrieraktivität wird durch Metalle der 8. Gruppe des Periodensystems zur Verfügung gestellt, während die selektive Oxidation durch ionisierten Sauerstoff erfolgt. Quelle für ionisierten Sauerstoff sind Oxide, die mit einer Fluoritstruktur oder einer Perovskitstruktur kristallisieren wie zum Beispiel Zirkonoxid, Ceroxid, Bismutoxid usw. Ein bevorzugter Katalysator ist zum Beispiel Pt/CeGdO. Er wird in pelletierter Form mit Durchmessern von 1,125 bis 1,5 Zoll (2,8 bis 3,8 cm) eingesetzt.

WO 99/48805 beschreibt ein Verfahren zur katalytischen Erzeugung von Wasserstoff durch eine selbstunterhaltende, partielle Oxidation und Dampfreformierung von Kohlenwasserstoffen, wobei eine Mischung aus den Kohlenwasserstoffen und einem Sauerstoff enthaltenden Gas und gegebenenfalls Dampf an einem Katalysator umgesetzt wird, der Rhodium auf einem Trägermaterial dispergiert enthält, welches als Kationen Cer und Zirkon enthält. Der Katalysator wird in granulierter Form eingesetzt. Ein mehrschichtiger Aufbau des Katalysators wird nicht beschrieben.

DE 197 27 841 A1 beschreibt ein Verfahren und eine Vorrichtung zur autothermen Reformierung von Kohlenwasserstoffen, bei denen der Brennstoff über eine Zuführungseinrichtung einem zweistufigen Reformierreaktor zugeführt wird. Das entstehende Reformat wird in einem Wärmetauscher im Gegenstrom und in wärmetauschender Weise zu von außen nach innen geführten Ausgangsstoffen der Reformierung geleitet. Der über die Zuführungseinrichtung zugeführte Brennstoff wird mit dem Ausgangsstoff direkt auf die einen Katalysator aufweisenden Reaktionszone aufgebracht, in der die Verbrennung und Reformierung bzw. Katalyse durchgeführt wird. Der Reformierreaktor enthält in einem oberen Bereich einen mit Katalysator beschichteten Wabenkörper und in einem unteren Bereich eine mit Katalysator beschichtete Schüttung. Anstelle der Schüttung kann auch ein Wabenkörper verwendet werden. Auch hier wird ein mehrschichtiger Aufbau des Katalysators nicht beschrieben.

In EP 0 112 613 B1 wird ein Verfahren zur autothermen Reformierung von Kohlenwasserstoffen beschrieben, bei dem die partielle Oxidation in Zone 1, die Dampfreformierung räumlich davon getrennt, in Zone 2 erfolgt. Für die partielle Oxidation werden Pt-und Pd-haltige Katalysatoren, für die Dampfreformierung edelmetallhaltige Katalysatoren verwendet. Ein mehrschichtiger Aufbau des Katalysators ist nicht offenbart.

WO 99/33567 beschreibt Katalysatoren für die partielle Oxidation von Kohlenwasserstoffen, deren monolithische Träger eine mehrlagige Struktur mit unterschiedlicher Porosität besitzen. In dieser Schrift bezieht sich der mehrlagige Aufbau nicht auf den Katalysator selbst, sondern auf das Trägersubstrat.

In DE 100 62 662 A1 wird ein mehrschichtiges Katalysatorsystem zur Reformierung von Methanol offenbart. Das Katalysatorsystem enthält eine erste katalytische Komponente auf Basis von Kupferoxid und Zinkoxid, die als untere Schicht hauptsächlich die Dampfreformierung katalysiert, sowie eine zweite, obere katalytische Schicht, die ein Edelmetall (Platin oder Palladium) und ein Metalloxid enthält und die hauptsächlich die partielle Oxidation von Methanol aktiviert. Das hierin beschriebene Katalysatorsystem ist für die autotherme Reformierung von Kohlenwasserstoffen jedoch nicht verwendbar, da es aufgrund der höheren Temperaturen zur Zersetzung bzw. Reduktion der Unedelmetalloxide (CuO, ZnO) und nachfolgend zu einer Legierungsbildung mit der Edelmetallkomponente kommt, so dass die Langzeitstabilität nicht gegeben ist.

In der EP 1 157 968 A1 wird ein Verfahren zur autothermen Dampfreformierung von Kohlenwasserstoffen vorgestellt, das adiabatisch betrieben wird und einen Edelmetallkatalysator auf einem Tragkörper benötigt.

Des weiteren wird in der WO 02/18269 A2 eine Katalysatorvorrichtung zur Wasserstofferzeugung beschrieben, die einen schichtenförmigem Aufbau besitzt. Diese Katalysatorvorrichtung besteht aus einem Monolithen, der eine Schicht besitzt, die einen Steam-Reforming-Katalysator (SR-Katalysator) enthält. Diese Schicht ist wiederum mit einer Schicht in Kontakt, die einen Katalysator zur partiellen Oxidation (CPO-Katalysator) enthält. In einer bevorzugten Ausführungsform liegt die Schicht mit dem Katalysator zur partiellen Oxidation (CPO) über der Schicht, die den Steam-Reforming-Katalysator enthält. In anderen Worten, die untere Katalysatorschicht enthält den Steam-Reforming-Katalysator, während die obere Schicht den Katalysator zur partiellen Oxidation enthält. Die Anmelderin hat sich eingehend mit dem Problem der autothermen Reformierung von Kohlenwasserstoffen befasst und festgestellt, dass die in WO 02/18269 A2 beschriebene Schichtabfolge niedrige Wasserstoffausbeuten liefert und damit zu einem niedrigen Reformer-Wirkungsgrad führt.

Dieser niedrigere Reformerwirkungsgrad führt dann wiederum dazu, dass das gesamte Brennstoffzellen-Antriebssystem (bestehend aus Brennstoffzellen-Stack, Reformereinheit und Steuerungseinheit) einen niedrigeren Gesamtwirkungsgrad besitzt, der nur unwesentlich besser ist als derjenige der modernen optimierten Dieselaggregate für PKWs. Bei Reformern, die in stationären Brennstoffzellensystemen Verwendung finden, führt der niedrige Wirkungsgrad zu einer geringeren Gesamtausbeute an Strom und Wärme, wodurch die Wettbewerbsfähigkeit mit konventionellen Kraft-Wärmegekoppelten Heiz-Systemen ("KWK-Systemen") gemindert wird.

Es besteht daher nach wie vor Bedarf an Verfahren zur autothermen Dampfreformierung von Kohlenwasserstoffen, die sehr hohe Wasserstoffausbeuten aufweisen und damit sehr gut für den Einsatz in mobilen und stationären Brennstoffzellensystemen geeignet sind. Weiterhin besteht Bedarf an für das Verfahren geeignete Katalysatoren.

Die Erfindung stellt ein Verfahren zur autothermen, katalytischen Dampfreformierung von Kohlenwasserstoffen unter Verwendung eines Katalysators bereit.

Der eingesetete Katalysator weist auf einem Tragkörper eine mehrlagige Beschichtung umfassend zwei unterschiedliche Katalysatorschichten, welche jeweils mindestens ein Platingruppenmetall auf einem oxidischen Trägermaterial enthalten. Die mehrlagige Beschichtung besitzt neben einer ersten, unteren Katalysatorschicht, die die partielle Oxidation ("CPO" nach GI. (2)) katalysiert, eine zweite, obere Katalysatorschicht, die hauptsächlich eine Aktivität bezüglich der Dampfreformierung (nach Gl. (1)) aufweist. Im Vergleich zur WO 02/18269 A2 ist die Schichtfolge genau umgekehrt.

Bei dreischichtigen Katalysatoranordnungen kann die Katalysatormasse eine weitere Katalysatorschicht, beispielsweise für die Kohlenmonoxid-Konvertierung ("Wassergasshift-Reaktion", WGS) besitzen, die als dritte Lage ganz oder partiell auf der zweiten Beschichtung aufgebracht ist. Die Katalysatorschicht für die Kohlenmonoxid-Konvertierung kann als katalytisch aktive Komponenten wenigstens ein Edelmetall enthalten. Auch mehr als dreischichtige Aufbauten, beispielsweise vierschichtige Anordnungen, sind möglich.

Bei dem erfindungsgemäßen Verfahren wird ein auf eine Vorwärmtemperatur erwärmtes Eduktgemisch aus Kohlenwasserstoffen, Sauerstoff und Wasser oder Wasserdampf über den Katalysator geleitet wird, wobei eine adiabatische Reaktionsführung erfolgt. Das Verfahren ist insgesamt gesehen einstufig, das heißt das Eduktgemisch wird über einen einzigen, mehrschichtigen Katalysator geleitet, der in der Lage ist, durch die katalytische, partielle Oxidation des Eduktgemisches die für die endotherme Dampfreformierung benötigte Energie bereitzustellen. Hierbei erhöht sich die Temperatur des Eduktgemisches von der Vorwärmtemperatur auf die notwendige Reaktionstemperatur zwischen 600 und 900° C. Partielle Oxidation und Dampfreformierung gehen auf dem Katalysator gleitend ineinander über. Die Abfolge von exothermer katalytischer, partieller Oxidation und endothermer Dampfreformierung sowie nachfolgender CO-Konvertierung ergeben ein einheitliches Temperaturprofil im Katalysator, das keine großen Temperaturschwankungen und -spitzen aufweist.

Der eingesetste Katalysator enthält auf einem Tragkörper eine Katalysatormasse, die in Form einer mehrfachen Beschichtung auf den geometrischen Oberflächen des Tragkörpers aufgebracht ist. Bevorzugte Tragkörper sind monolithische Wabenkörper aus Keramik oder Metall, offenzellige keramische oder metallische Schaumkörper, Metallbleche oder unregelmäßig geformte Bauteile. Die Gesamtdicke der katalytischen Beschichtung liegt in der Regel zwischen 20 und 200 µm.

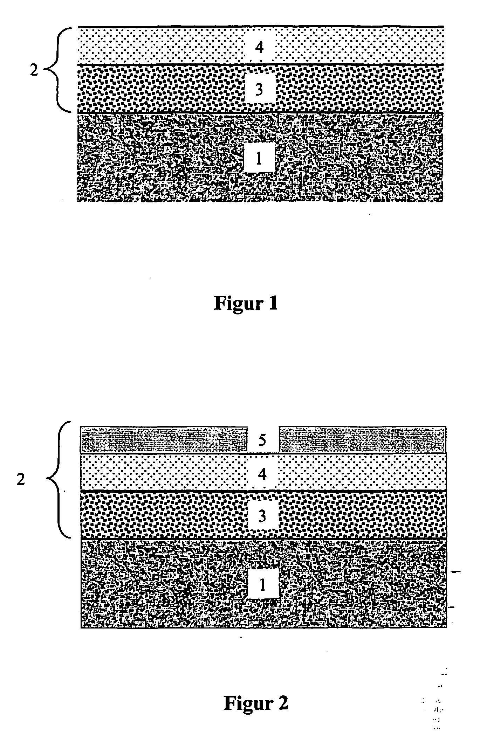

Im Falle einer zweilagigen Beschichtung enthält die Katalysatormasse neben einer ersten, unteren Katalysatorschicht, die die partielle Oxidation katalysiert, eine zweite, obere Katalysatorschicht, die eine Aktivität bezüglich der Dampfreformierung aufweist. Eine schematische Darstellung eines möglichen Aufbaus des erfindungsgemäßen Katalysators ist in **Figur 1** gezeigt. Der Katalysator umfasst einen Tragkörper (1), auf dem eine zweischichtige Katalysatormasse (2) aufgebracht ist, die wiederum eine untere Schicht (3) und eine obere Schicht (4) umfasst. Die untere Katalysatorschicht die partielle Oxidation, die obere Katalysatorschicht katalysiert die Dampfreformierung.

Die beiden unterschiedlichen Katalysatorschichten enthalten jeweils mindestens ein Platingruppenmetall auf einem feinteiligen, oxidischen Trägermaterial. Es handelt sich also um sogenannte geträgerte Katalysatoren oder Trägerkatalysatoren, bei denen das Edelmetall in hoher Verteilung (d.h. Dispersion) auf das oxidische Trägermaterial aufgebracht ist. Der Begriff des Trägerkatalysators bezieht sich im Rahmen dieser Erfindung nur auf die Katalysatormasse und muß von dem Katalysator unterschieden werden, der den Tragkörper (1) mit der darauf aufgebrachten Katalysatormasse (2) umfasst.

Die untere Katalysatorschicht (3), die die partielle Oxidation katalysiert, enthält als Edelmetall bevorzugt 0,1 bis 5 Gew.-% Platin, bezogen auf ihr Gesamtgewicht. Platin weist eine hohe Aktivität für die Oxidation von Kohlenwasserstoffen auf. Zur Anpassung der Oxidationsaktivität an die Erfordernisse des Prozesses kann die Katalysatormasse noch andere Edelmetalle, beispielsweise Palladium oder Rhodium, enthalten. Bevorzugt wird eine Katalysatormasse eingesetzt, die Platin auf Aluminiumoxid und Oxiden der Seltenen Erden enthält.

Die obere Katalysatorschicht (4) zur Dampfreformierung enthält als Edelmetall bevorzugt 0,1 bis 5 Gew.-% Rhodium, bezogen auf ihr Gesamtgewicht. Rhodium weist eine hohe Aktivität für die Dampfreformierung auf, wobei gleichzeitig seine Oxidationsaktivität, verglichen mit der von Platin, gering ist. Bevorzugt wird eine Katalysatormasse verwendet, die Rhodium auf einem aktiven Aluminiumoxid enthält. Diese Katalysatorschicht kann zusätzlich noch Ceroxid zur Verminderung von Rußablagerungen und zur Erhöhung der Schwefelresistenz enthalten.

Im Falle einer dreilagigen Beschichtung enthält die Katalysatormasse neben der ersten, unteren Katalysatorschicht (die partielle Oxidation katalysiert) eine mittlere Katalysatorschicht (die bezüglich der Dampfreformierung aktiv ist), noch eine dritte Schicht, die die Kohlenmonoxid-(CO)-Konvertierung (die sog. Wassergasshift ("WGS")-Reaktion) katalysiert. Eine schematische Darstellung eines möglichen Aufbaus des erfindungsgemäßen Katalysators ist in **Figur 2** gezeigt. Der Katalysator umfasst einen Tragkörper (1), auf dem eine dreischichtige Katalysatormasse (2) aufgebracht ist, die wiederum eine untere Schicht (3), eine mittlere Schicht (4) und eine obere Schicht (5) umfasst. Die untere Katalysatorschicht katalysiert die partielle Oxidation, die mittlere Katalysatorschicht die Dampfreformierung und die obere Schicht die Kohlenmonoxid-Konvertierung.

Die Umsetzung von Kohlenmonoxid mit Wasser zu Kohlendioxid und Wasserstoff in Gegenwart von Katalysatoren ist ein bekanntes Verfahren zur Herstellung von wasserstoffreichen Gasmischungen, dem folgende exotherme Reaktion zugrunde liegt:

CO+H₂O ↔ H₂+CO2 ; ΔH>0 (4)

Die Reaktion gemäß Reaktionsgleichung (4) wird im folgenden als Kohlenmonoxid-Konvertierung oder CO-Konvertierung bezeichnet. Im angelsächsischen Sprachgebrauch wird hierfür häufig der Begriff "water-gas-shift reaction" ("WGS") verwendet.

In vorliegenden Fall des dreilagigen Katalysatorsystems wird vorzugsweise ein edelmetallhaltiger Shift-Katalysator für die Hochtemperatur-CO-Konvertierung mit einer Arbeitstemperatur zwischen 280 und 550° C eingesetzt. Solche Shift-Katalysatoren sind aus der EP 1 136 441 A2 der Anmelderin bekannt. Sie enthalten wenigstens eines der Edelmetalle Platin, Palladium, Rhodium, Ruthenium, Iridium, Osmium und Gold auf einem oxidischen Trägermaterial aus der Gruppe Aluminiumoxid, Siliciumdioxid, Titanoxid, Seltenerdoxide oder Mischoxide hiervon oder Zeolithe. Bevorzugt wird ein CO-Konvertierungskatalysator auf der Basis Platin, Palladium und Eisen verwendet.

Bei der Hochtemperatur-CO-Konvertierung enthält das Reformatgas gewöhnlich 2 bis 40 Vol.-% Kohlenmonoxid und besitzt eine vom Reformierungsprozess herrührende Eingangstemperatur zwischen 300 und 600° C.

Als oxidisches Trägermaterial für die Platingruppenmetalle kommen beispielsweise Oxide wie Aluminiumoxid, Siliciumdioxid, Titandioxid oder Mischoxide hiervon und Zeolithe in Frage. Bevorzugt werden Materialien mit einer spezifischen Oberfläche von mehr als 10 m²/g eingesetzt, um eine möglichst hochdisperse Verteilung der katalytisch aktiven Komponenten auf dieser großen Oberfläche zu ermöglichen. Die Techniken zur Herstellung eines solchen Trägerkatalysators und zur Beschichtung eines inerten Tragkörpers damit sind dem Fachmann bekannt.

Zur thermischen Stabilisierung der Katalysatormasse kann sie zusätzlich wenigstens ein Oxid ausgewählt aus Boroxid, Bismutoxid, Galliumoxid, Oxide der Alkalimetalle, Oxide der Erdalkalimetalle, Oxide der Nebengruppenelemente und Oxide der Seltenerdmetalle beispielsweise in einer Konzentration von bis zu 70 Gew.-%, bezogen auf das Gesamtgewicht der Katalysatormasse, enthalten.

Der eingesetate mehrschichtige Katalysator weist erhebliche Vorteile gegenüber konventionellen Katalysatoren auf. So haben die Erfinder festgestellt, dass überraschenderweise durch das Aufbringen der oberen Katalysatorschicht (zur Dampfreformierung) auf die untere, oxidationsaktive Schicht insgesamt die partielle Oxidation des Eduktgemisches am Einlauf des Katalysators gedämpft wird. Dadurch werden hohe Temperaturspitzen vermieden, die den Katalysator zerstören könnten. Durch das Anbringen einer dritten katalytisch aktiven Schicht zur Kohlenmonoxid-Konvertierung (WGS) wird zusätzlich die Ausbeute an Wasserstoff erhöht und der Gehalt an Restkohlenwasserstoffen abgesenkt.

Das erfindungsgemäße Verfahren kann mit aliphatischen und/oder aromatischen Kohlenwasserstoffen (Methan, Propan, Toluol etc.) oder Kohlenwasserstoffgemischen (z.B. Erdgas, Benzin, Heizöl oder Dieselöl) betrieben werden. Je nach verwendetem Kohlenwasserstoff kann mit Dampf/Kohlenstoff-Verhältnissen S/C zwischen 0,7 und 5 gearbeitet werden. Die Luftzahl λ des Eduktgemisches und seine Vorwärmtemperatur sollte dabei so gewählt, daß sich am Ausgang des Katalysators eine Temperatur zwischen 600 und 900° C einstellt.

Das vorgeschlagene Verfahren stellt nur einen Teil eines Gesamtverfahrens zur Gewinnung von Wasserstoff für mobile und stationäre Brennstoffzelleneinheiten dar. Das Gesamtverfahren umfasst neben der autothermen Reformierung noch weitere Verfahrensstufen zur Entfernung von Kohlenmonoxid aus dem Reformat, beispielsweise durch präferentielle Oxidation von CO (PrOx), Methanisierung oder externe, Niedertemperatur-CO-Konvertierung.

Zur schnellen Inbetriebnahme des Reformersystems kann das Eduktgemisch auch kurzzeitig elektrisch vorgeheizt werden. Die geringe thermische Masse des Katalysators führt vorteilhafterweise dazu, daß schon nach wenigen Sekunden die volle Wasserstoffproduktion einsetzt.

Weitere Ausführungsformen der vorliegenden Erfindung betreffen sogenannte gradierte Katalysatoranordnungen.

Bei gradierten Katalysatoranordnungen kann die Katalysatormasse auf einem monolithischen Tragkörper, der eine Länge L aufweist und von einer Eintrittsstirnfläche bis zu einer Austrittsstirnfläche von Strömungskanälen durchzogen ist, aufgebracht sein und eine untere, direkt auf dem Tragkörper liegende Katalysatorschicht und eine auf der unteren Katalysatorschicht liegende obere Katalysatorschicht enthalten. Dabei ist die untere Schicht über die gesamte Länge L des Tragkörpers, und die obere Schicht nur auf einem bestimmten Segment, zum Beispiel dem austrittsseitigen Teil des Tragkörpers aufgebracht. Die genaue Gestaltung der Schichtabfolge richtet sich dabei nach der Konstruktion, der Geometrie und der Wirkungsweise des Reformersystems.

Die nachfolgenden Beispiele sowie das Vergleichsbeispiel sollen das Wesen der Erfindung näher erläutern. Die Erfindung ist jedoch nicht auf diese Ausführungsformen beschränkt.

### BEISPIELE

### Beispiel 1:

### Zweischichtiger Katalysator (erfindungsgemäß)

Es wird Methan nach dem erfindungsgemäßen Verfahren reformiert, wobei ein zweischichtiger Katalysator zum Einsatz kommt. Bei dem Katalysator handelt es sich um einen katalytisch beschichteten keramischen Wabenkörper mit einer Zelldichte von 62 Zellen/cm² und einem Volumen von 30 ml.

Die untere Schicht des Zweischichtkatalysators besteht aus einem Platin/Aluminiumoxid/Ceroxid/Zirkonoxid-Trägerkatalysator (für CPO). Die obere Schicht des Katalysators besteht aus einem Rhodium/Aluminiumoxid-Trägerkatalysator (für SR). Die Gesamtkonzentration der katalytischen Beschichtung beträgt 150 g/l; die Beschichtungskonzentration der Edelmetalle ist 0,5g/l Platin und 0,5 g/l Rhodium.

Zur Durchführung der autothermen Reformierung werden die Edukte auf 600 °C erhitzt und dann gemeinsam über den Katalysator geleitet. Folgende Stoffströme werden eingesetzt:

| | |
|---|---|
| Methan: | 152 g/h |
| Wasser: | 454 g/h |
| Luft: | 319 Nl/h |

Die Eingangstemperatur des Stoffgemisches beträgt 610°C, die Ausgangstemperatur liegt bei 645°C. Das Trockenreformat des Zweischichtkatalysators enthält 45,9 Vol.-% Wasserstoff, im Vergleich zu 44,5 Vol.-% im Trockenreformat des Zweischichtkatalysators von Vergleichsbeispiel 1 (VB1). Der CO-Gehalt beträgt lediglich 4,1 Vol.-%. Die Ergebnisse sind in **Tabelle 1** zusammengestellt.

### Vergleichsbeispiel 1 (VB1)

### Zweischichtiger Katalysator (nach WO 02/18269 A2; nicht erfindungsgemäß)

Es wird Methan nach dem erfindungsgemäßen Verfahren gemäß Beispiel 1 reformiert, wobei ein zweischichtiger Katalysator zum Einsatz kommt. Bei dem Katalysator handelt es sich um einen katalytisch beschichteten keramischen Wabenkörper mit einer Zelldichte von 62 Zellen/cm² und einem Volumen von 30 ml.

Gemäß der WO 02/18269 A2 wird die Schichtfolge aus Beispiel 1 umgedreht. Die obere Schicht des Zweischichtkatalysators besteht aus einem Platin/Aluminiumoxid/Ceroxid/Zirkonoxid-Trägerkatalysator (für CPO). Die untere Schicht des Katalysators besteht aus einem Rhodium/Aluminiumoxid-Trägerkatalysator (für SR). Die Gesamtkonzentration der katalytischen Beschichtung beträgt 150 g/l; die Beschichtungskonzentration der Edelmetalle ist 0,5 g/l Platin und 0,5 g/l Rhodium.

Zur Durchführung der autothermen Reformierung werden die Edukte auf 600 °C erhitzt und dann gemeinsam über den Katalysator geleitet. Folgende Stoffströme werden eingesetzt:

| | |
|---|---|
| Methan: | 152 g/h |
| Wasser: | 454 g/h |
| Luft: | 319 Nl/h |

Die Eingangstemperatur des Stoffgemisches beträgt 610°C, die Ausgangstemperatur liegt bei 645 °C. Das Trockenreformat des nicht erfindungsgemäßen Zweischichtkatalysators enthält 44,5 Vol.-% Wasserstoff, im Vergleich zu 45,9 Vol.-% im Trockenreformat des erfindungsgemäßen Zweischichtkatalysators von Beispiel 1. Die Ergebnisse sind in **Tabelle 1** zusammengestellt. Man erkennt daraus die Überlegenheit der erfindungsgemäßen Schichtabfolge des zweischichtigen Katalysatorsystems.

### Vergleichsbeispiel 2 (VB2)

### Einschichtiger Katalysator (nicht erfindungsgemäß)

Als weiteres Vergleichsbeispiel kommt ebenfalls ein katalytisch beschichteter keramischer Wabenkörper mit einer Zelldichte von 62 Zellen/cm² und einem Volumen von 30 ml zum Einsatz. Die katalytische Beschichtung besteht bei dem Einschichtsystem aus einem Rhodium/Aluminiumoxid-Trägerkatalysator und ist in einer Konzentration von 150 g/l auf den Wabenkörper aufgebracht. Die Beschichtungskonzentration des Rhodiums beträgt 1 g/l. Es wird Methan nach dem in Beispiel 1 beschriebenen Verfahren reformiert.

Zur Durchführung der autothermen Reformierung werden die Edukte wiederum auf 600 °C erhitzt und dann gemeinsam über den Katalysator geleitet. Die Stoffströme von Methan, Wasser und Luft sind identisch zu Beispiel 1.

Die Eingangstemperatur beträgt 605 °C, die Ausgangstemperatur liegt bei 640 °C. Das Trockenreformat des Einschichtkatalysators enthält 43,4 Vol.-% Wasserstoff (im Vergleich zu 45,9 Vol.-% beim erfindungsgemäßen Zweischichtkatalysator von Beispiel 1). Die Konzentrationen an unerwünschtem CO (4,8 Vol.-%) und Restmethan (1,7 Vol.-%) liegen deutlich höher. Die Ergebnisse sind ebenfalls in **Tabelle 1** zusammengestellt. Man erkennt daraus die Überlegenheit des erfindungsgemäßen Mehrschichtkatalysatorsystems.

### Beispiel 2:

### Dreischichtiger Katalysator (erfindungsgemäß)

Es wird Methan nach dem erfindungsgemäßen Verfahren reformiert, wobei ein dreischichtiger Katalysator zum Einsatz kommt. Bei dem Katalysator handelt es sich um einen katalytisch beschichteten keramischen Wabenkörper mit einer Zelldichte von 62 Zellen/cm² und einem Volumen von 30 ml.

Die untere Schicht besteht aus einem Platin/Aluminiumoxid/Ceroxid/Zirkonoxid-Trägerkatalysator (für CPO). Die mittlere Schicht des Katalysators besteht aus einem Rhodium/Aluminiumoxid-Trägerkatalysator (für SR). Die obere Schicht besteht aus einem CO-Konvertierungskatalysator und wird im letzten Drittel des Volumensegmentes (in Strömungsrichtung gesehen) angebracht. Die katalytisch aktive Beschichtung des CO-Konvertierungskatalysators besteht aus 1,5 Gew.-% Pt, 1,0 Gew.-% Pd und 2,4 Gew.-% Fe, aufgebracht auf Aluminiumoxid/Ceroxid.

Die Gesamtkonzentration der katalytischen Beschichtung beträgt 180 g/l; die Beschichtungskonzentration der Edelmetalle ist 0,8 g/l Platin, 0,2 g/l Palladium und 0,5 g/l Rhodium.

Zur Durchführung der autothermen Reformierung werden die Edukte auf 600 °C erhitzt und dann gemeinsam über den Katalysator geleitet. Folgende Stoffströme werden eingesetzt:

| | |
|---|---|
| Methan: | 152 g/h |
| Wasser: | 454 g/h |
| Luft: | 319 Nl/h |

Die Eingangstemperatur des Stoffgemisches beträgt 605 °C, die Ausgangstemperatur liegt bei 630 °C. Das Trockenreformat des Dreischichtkatalysators enthält 46,3 Vol.-% Wasserstoff. Der CO-Gehalt beträgt lediglich 3,7 Vol.-%. Die Ergebnisse sind in **Tabelle 1** zusammengestellt. Man erkennt daraus die Überlegenheit des erfindungsgemäßen Dreischichtkatalysatorsystems.

**Tabelle 1: Ergebnisse der erfindungsgemäßen Mehrschichtkatalysatoren im Vergleich zu einem Mehrschichtkatalysator mit unterschiedlicher Schichtabfolge (VB1) sowie zu einem konventionellen einschichtigen Katalysator (VB2) bei der autothermen Reformierung von Methan**

| | H₂ (Vol.-%) | CO₂ (Vol.-%) | CO (Vol.-%) | Restmethan (Vol.-%) |
|---|---|---|---|---|
| Beispiel 1 | 45,9 | 13,8 | 4,1 | 1,0 |
| Vergleichsbeispiel 1 (VB1, WO 02/18269) | 44,5 | 13,1 | 4,5 | 1,3 |
| Vergleichsbeispiel 2 (VB2) | 43,4 | 12,7 | 4,8 | 1,7 |
| Beispiel 2 | 46,3 | 14,1 | 3,7 | 1,1 |

## Patentansprüche

1. Verfahren zur autothermen, katalytischen Dampfreformierung von Kohlenwasserstoffen durch Leiten eines Auf eine vorwärmtemperatur erwämten Eduktgemisches aus Kohlenwasserstoffen, Sauerstoff und Wasser oder Wasserdampf über einen mehrschichtigen Katalysator, umfassend einen Tragkörper und eine darauf aufgebrachte mehrschichtige Katalysatormasse, wobei diese eine untere, direkt auf dem Tragkörper liegende Katalysatorschicht und eine auf der unteren Katalysatorschicht liegende obere Katalysatorschicht enthält, wobei die untere Katalysatorschicht die partielle Oxidation und die obere Katalysatorschicht die Dampfreformierung katalysiert und wobei es unter adiabatischen Bedingungen bei Reaktionstemperaturen zwischen 600 und 900°C durchgeführt wird.

2. Verfahren nach Anspruch 1, wobei die untere Katalysatorschicht des mehrschichtigen Katalysators Platin in einer Konzentration von 0,1 bis 5 Gew.-%, und die obere Katalysatorschicht Rhodium in einer Konzentration von 0,1 bis 5 Gew.-%, bezogen auf ihr Gesamtgewicht, enthält.

3. Verfahren nach Anspruch 1 oder 2, wobei die Katalysatorschichten des mehrschichtigen Katalysators als weitere katalytisch aktive Komponenten Edelmetalle, Seltenerdmetalle und Unedelmetalle der Nebengruppen enthalten.

4. Verfahren nach Anspruch 3, wobei die Katalysatorschichten jeweils mindestens ein Metall aus der 8. Nebengruppe auf einem oxidischen Trägermaterial aus der Gruppe Aluminiumoxid, Siliciumdioxid, Titandioxid, Boroxid, Bismutoxid, Galliumoxid, Oxide der Alkalimetalle, Oxide der Erdalkalimetalle, Oxide der Nebengruppenelemente, Seltenerdoxide oder Mischoxide hiervon oder Zeolithe enthalten.

5. Verfahren nach Anspruch 4, wobei die Katalysatormasse auf einem monolithischen Tragkörper, der eine Länge L aufweist und von einer Eintrittsstirnfläche bis zu einer Austrittsstirnfläche von Strömungskanälen durchzogen ist, eine untere, direkt auf dem Tragkörper liegende, Katalysatorschicht und eine auf der unteren Katalysatorschicht liegende obere Katalysatorschicht enthält, wobei die untere Schicht über die gesamte Länge des Tragkörpers und die obere Schicht nur auf einem Teil des Tragkörpers aufgebracht ist.

6. Verfahren nach einem der Ansprüche 1 bis 4, wobei der mehrschichtige Katalysator eine weitere Katalysatorschicht für die Kohlenmonoxid-Konvertierung enthält, die als dritte Schicht auf der zweiten Katalysatorschicht aufgebracht ist.

7. Verfahren nach Anspruch 6, wobei die dritte Katalysatorschicht nur auf einem Teil der zweiten Katalysatorschicht aufgebracht ist.

8. Verfahren nach einem der Ansprüche 6 oder 7, wobei die Katalysatorschicht für die Kohlenmonoxid-Konvertierung als katalytisch aktive Komponenten wenigstens eines der Edelmetalle Pt, Pd, Rh, Ru, Ir, Os und Au auf einem oxidischen Trägermaterial aus der Gruppe Aluminiumoxid, Siliciumdioxid, Titandioxid, Seltenerdoxide oder Mischoxide hiervon oder Zeolithe enthält.

9. Verfahren nach Anspruch 8, wobei die Katalysatorschicht für die Kohlenmonoxid-Konvertierung als weitere katalytisch aktive Komponenten mindestens ein Seltenerdmetall und wenigstens ein Unedelmetall der Nebengruppen enthält.

10. Verfahren nach Anspruch 9, wobei die Katalysatorschicht für die Kohlenmonoxid-Konvertierung Platin und Palladium in einer Konzentration von jeweils 0,1 bis 5 Gew.-%, bezogen auf ihr Gesamtgewicht, auf einem Trägermaterial aus der Gruppe Aluminiumoxid, Siliciumdioxid, Titandioxid, Seltenerdoxide oder Mischoxide hiervon oder Zeolithe enthält.

11. Verfahren nach Anspruch 10, wobei die einzelnen Katalysatorschichten zusätzlich wenigstens ein Oxid ausgewählt aus der Gruppe Boroxid, Bismutoxid, Galliumoxid, Oxide der Alkalimetalle, Oxide der Erdalkalimetalle, Oxide der Nebengruppenelemente und Oxide der Seltenerdmetalle in einer Konzentration von bis zu 70 Gew.-%, bezogen auf das Gesamtgewicht der Katalysatormasse, enthalten.

12. Verfahren nach einem der Ansprüche 1 bis 11, wobei als Kohlenwasserstoffe aliphatische und/oder aromatische Kohlenwasserstoffe wie Methan, Propan oder Toluol eingesetzt werden.

13. Verfahren nach einem der Ansprüche 1 bis 11, wobei als Kohlenwasserstoffe aliphatische und/oder aromatische Kohlenwasserstoffgemische wie Erdgas, Benzin, Heizöl oder Dieselöl eingesetzt werden.

14. Verfahren nach einem der Ansprüche 1 bis 13, wobei das Dampf/Kohlenstoff-Verhältnis S/C zwischen 0.7 und 5 liegt.

15. Verfahren nach einem der Ansprüche 1 bis 14 zur Verwendung in Reformern für Brennstoffzellensysteme.

## Claims

1. Process for the autothermal, catalytic steam reforming of hydrocarbons by passing a feed mixture of hydrocarbons, oxygen and water or water vapour which has been heated to a preheating temperature over a multilayer catalyst which comprises a support body and a multilayer catalyst composition applied thereto, wherein this catalyst composition comprises a lower catalyst layer located directly on the support body and an upper catalyst layer located on the lower catalyst layer and the lower catalyst layer catalyses the partial oxidation and the upper catalyst layer catalyses steam reforming, where the process is carried out under adiabatic conditions at reaction temperatures of from 600 to 900°C.

2. Process according to Claim 1, wherein the lower catalyst layer of the multilayer catalyst contains platinum in a concentration of from 0.1 to 5% by weight and the upper catalyst layer contains rhodium in a concentration of from 0.1 to 5% by weight, based on its total weight.

3. Process according to Claim 1 or 2, wherein the catalyst layers of the multilayer catalyst contain noble metals, rare earth metals and base metals of the transition groups as further catalytically active components.

4. Process according to Claim 3, wherein the catalyst layers each comprise at least one metal of transition group 8 on an oxidic support material selected from the group consisting of aluminium oxide, silicon dioxide, titanium dioxide, boron oxide, bismuth oxide, gallium oxide, oxides of the alkali metals, oxides of the alkaline earth metals, oxides of the transition elements, rare earth oxides and mixed oxides thereof and zeolites.

5. Process according to Claim 4, wherein the catalyst composition has been applied to a monolithic support body which has a length L and through which flow channels run from an entry end face to an exit end face and comprises a lower catalyst layer located directly on the support body and an upper catalyst layer located on the lower catalyst layer, with the lower layer having been applied over the total length of the support body and the upper layer having been applied only to part of the support body.

6. Process according to any of Claims 1 to 4, wherein the multilayer catalyst contains a further catalyst layer for the WGS reaction applied as a third layer to the second catalyst layer.

7. Process according to Claim 6, wherein the third catalyst layer has been applied to only part of the second catalyst layer.

8. Process according to Claim 6 or 7, wherein the catalyst layer for the WGS reaction comprises at least one of the noble metals Pt, Pd, Rh, Ru, Ir, Os and Au as catalytically active component on an oxidic support material selected from the group consisting of aluminium oxide, silicon dioxide, titanium dioxide, rare earth oxides and mixed oxides thereof and zeolites.

9. Process according to Claim 8, wherein the catalyst layer for the WGS reaction contains at least one rare earth metal and at least one base metal of the transition groups as further catalytically active components.

10. Process according to Claim 9, wherein the catalyst layer for the WGS reaction comprises platinum and palladium in a concentration of from 0.1 to 5% by weight in each case, based on its total weight, on a support material selected from the group consisting of aluminium oxide, silicon dioxide, titanium dioxide, rare earth oxides and mixed oxides thereof and zeolites.

11. Process according to Claim 10, wherein the individual catalyst layers additionally contain at least one oxide selected from the group consisting of boron oxide, bismuth oxide, gallium oxide, oxides of the alkali metals, oxides of the alkaline earth metals, oxides of the transition elements and oxides of the rare earth metals in a concentration of up to 70% by weight, based on the total weight of the catalyst composition.

12. Process according to any of Claims 1 to 11, wherein aliphatic and/or aromatic hydrocarbons such as methane, propane or toluene are used as hydrocarbons.

13. Process according to any of Claims 1 to 11, wherein aliphatic and/or aromatic hydrocarbon mixtures such as natural gas, petrol, heating oil or diesel oil are used as hydrocarbons.

14. Process according to any of Claims 1 to 13, wherein the steam/carbon ratio S/C is in the range from 0.7 to 5.

15. Process according to any of Claims 1 to 14 for use in reformers for fuel cell systems.

## Revendications

1. Procédé pour le vaporeformage catalytique autothermique d'hydrocarbures par passage d'un mélange de produits de départ à base d'hydrocarbures, oxygène et eau ou vapeur d'eau, porté à une température de préchauffage, sur une catalyseur multicouche, comprenant un corps de support et une masse de catalyseur multicouche appliquée sur celui-ci, procédé dans lequel cette dernière comporte une couche de catalyseur inférieure se trouvant directement sur le corps de support et une couche de catalyseur supérieure se trouvant sur la couche de catalyseur inférieure, dans lequel la couche de catalyseur inférieure catalyse l'oxydation partielle et la couche de catalyseur supérieure catalyse le vaporeformage et le procédé étant effectué dans des conditions adiabatiques à des températures de réaction comprises entre 600 et 900 °C.

2. Procédé selon la revendication 1, dans lequel la couche de catalyseur inférieure du catalyseur multicouche contient du platine à une concentration de 0,1 à 5 % en poids, et la couche de catalyseur supérieure contient du rhodium à une concentration de 0,1 à 5 % en poids, par rapport à leur poids total.

3. Procédé selon la revendication 1 ou 2, dans lequel les couches de catalyseur du catalyseur multicouche contiennent comme autres composants catalytiquement actifs des métaux nobles, des terres rares et des métaux communs des groupes B.

4. Procédé selon la revendication 3, dans lequel les couches de catalyseur contiennent chacune au moins un métal choisi dans le groupe 8B sur un matériau de support de type oxyde choisi dans le groupe constitué par l'oxyde d'aluminium, le dioxyde de silicium, le dioxyde de titane, l'oxyde de bore, l'oxyde de bismuth, l'oxyde de gallium, les oxydes des métaux alcalins, les oxydes des métaux alcalino-terreux, les oxydes des éléments des groupes B, les oxydes des terres rares ou des oxydes mixtes de ceux-ci ou les zéolithes.

5. Procédé selon la revendication 4, dans lequel la masse de catalyseur comporte sur un corps de support monolithique qui présente une longueur L et est traversé, d'une face frontale d'entrée à une face frontale de sortie, par des canaux d'écoulement, une couche de catalyseur inférieure se trouvant directement sur le corps de support et une couche de catalyseur supérieure se trouvant sur la couche de catalyseur inférieure, la couche inférieure étant appliquée sur toute la longueur du corps de support et la couche supérieure n'étant appliquée que sur une partie du corps de support.

6. Procédé selon l'une quelconque des revendications 1 à 4, dans lequel le catalyseur multicouche contient une autre couche de catalyseur pour la conversion en monoxyde de carbone, qui est appliquée en tant que troisième couche sur la deuxième couche de catalyseur.

7. Procédé selon la revendication 6, dans lequel la troisième couche de catalyseur n'est appliquée que sur une partie de la deuxième couche de catalyseur.

8. Procédé selon la revendication 6 ou 7, dans lequel la couche de catalyseur pour la conversion en monoxyde de carbone contient comme composants catalytiquement actifs au moins l'un des métaux nobles Pt, Pd, Rh, Ru, Ir, Os et Au sur un matériau de support de type oxyde choisi dans le groupe constitué par l'oxyde d'aluminium, le dioxyde de silicium, le dioxyde de titane, les oxydes de terres rares ou des oxydes mixtes de ceux-ci ou les zéolithes.

9. Procédé selon la revendication 8, dans lequel la couche de catalyseur pour la conversion en monoxyde de carbone contient comme autres composants catalytiquement actifs au moins une terre rare et au moins un métal commun des groupes B.

10. Procédé selon la revendication 9, dans lequel la couche de catalyseur pour la conversion en monoxyde de carbone contient du platine et du palladium à une concentration chacun de 0,1 à 5 % en poids, par rapport à son poids total, sur un matériau de support choisi dans le groupe constitué par l'oxyde d'aluminium, le dioxyde de silicium, le dioxyde de titane, les oxydes de terres rares ou des oxydes mixtes de ceux-ci ou les zéolithes.

11. Procédé selon la revendication 10, dans lequel les couches de catalyseur individuelles en outre contiennent au moins un oxyde choisi dans le groupe constitué par l'oxyde de bore, l'oxyde de bismuth, l'oxyde de gallium, les oxydes des métaux alcalins, les oxydes des métaux alcalino-terreux, les oxydes des éléments des groupes B et les oxydes des terres rares à une concentration de jusqu'à 70 % en poids, par rapport au poids total de la masse de catalyseur.

12. Procédé selon l'une quelconque des revendications 1 à 11, dans lequel on utilise comme hydrocarbures des hydrocarbures aliphatiques et/ou aromatiques tels que le méthane, le propane ou le toluène.

13. Procédé selon l'une quelconque des revendications 1 à 11, dans lequel on utilise comme hydrocarbures des mélanges d'hydrocarbures aliphatiques et/ou aromatiques tels que le gaz naturel, l'essence, le fioul ou le gazole.

14. Procédé selon l'une quelconque des revendications 1 à 13, dans lequel le rapport vapeur/carbone S/C est compris entre 0,7 et 5.

15. Procédé selon l'une quelconque des revendications 1 à 14, pour utilisation dans le reformage pour systèmes de cellules à combustible.
